# EUROPEAN PATENT APPLICATION

(11) **EP 4 640 302 A2**
(43) Date of publication of application: **29.10.2025**
(21) Application number: 25162027.4
(22) Date of filing: 06.03.2025
(51) Int. Cl.: B01D 53/86

(54) **DINITROGEN OXIDE PURIFICATION SYSTEM, INTERNAL COMBUSTION ENGINE SYSTEM, AND DINITROGEN OXIDE PURIFICATION METHOD**

(30) Priority: 22.03.2024 JP 2024045914
(71) Applicant: Yanmar Holdings Co., Ltd., Osaka-shi, Osaka (JP)
(72) Inventor: MITARAI, Kenta, Osaka (JP); KAWABE, Ken, Osaka (JP); SEKINE, Yasushi, Tokyo (JP); SHIGEMOTO, Ayaka, Tokyo (JP); UKAI, Chihiro, Tokyo (JP)
(74) Representative: Novagraaf International SA

(57) **Abstract**

[Problem] The present invention provides a dinitrogen oxide purification system, an internal combustion engine system, and a dinitrogen oxide purification method, which make it easy to obtain sufficient effects of decomposing or reducing dinitrogen oxide.

[Solution] The dinitrogen oxide purification system 10 includes an intake section 14 and a purification section 1. The intake section 14 takes in dinitrogen oxide in the presence of coexisting O₂ and/or H₂O. The purification section 1 decomposes or reduces the dinitrogen oxide taken into the intake section 14.

## Description

### TECHNICAL FIELD

The present invention relates to a dinitrogen oxide purification system, an internal combustion engine system, and a dinitrogen oxide purification method, for decomposing or reducing dinitrogen oxide.

### BACKGROUND ART

As a related art, a catalyst composite for removing dinitrogen oxide (N₂O) is known (e.g. see Patent Document 1). In the related art, a catalyst material is incorporated into a support, and this catalyst material contains a rhodium (Rh) component carried on a ceria-based carrier. This catalyst composite shows an H₂ consumption peak at about 100°C or lower in a measurement using hydrogen temperature-programmed reduction (H₂-TPR).

### PRIOR ART DOCUMENT

### PATENT DOCUMENT

Patent Document 1: Japanese Unexamined Patent Application Publication No. 2017-538573

### SUMMARY OF INVENTION

### TECHNICAL PROBLEM

However, for example, the catalyst composite according to the related art is difficult to obtain sufficient effects of decomposing or reducing dinitrogen oxide in exhaust gas from an engine in a temperature range of an engine exhaust heat.

An object of the present invention is to provide a dinitrogen oxide purification system, an internal combustion engine system, and a dinitrogen oxide purification method, which make it easy to obtain sufficient effects of decomposing or reducing dinitrogen oxide.

### SOLUTION TO PROBLEM

The dinitrogen oxide purification system according to an aspect of the present invention includes an intake section and a purification section. The intake section takes in dinitrogen oxide in the presence of coexisting O₂ and/or H₂O. The purification section decomposes or reduces the dinitrogen oxide taken into the intake section.

The dinitrogen oxide purification system according to an aspect of the present invention includes the intake section and the purification section. The intake section takes in dinitrogen oxide. The purification section decomposes or reduces the dinitrogen oxide taken into the intake section. The purification section has a catalyst that decomposes or reduces the dinitrogen oxide, and an electrode that applies an electric field to the catalyst.

The internal combustion engine system according to an aspect of the present invention includes the dinitrogen oxide purification system and an engine. The dinitrogen oxide purification system is disposed in an exhaust gas path from the engine.

The dinitrogen oxide purification method according to an aspect of the present invention includes taking in dinitrogen oxide in the presence of coexisting O₂ and/or H₂O, and decomposing or reducing the taken-in dinitrogen oxide.

### ADVANTAGEOUS EFFECTS OF INVENTION

According to the present invention, it is possible to provide a dinitrogen oxide purification system, an internal combustion engine system, and a dinitrogen oxide purification method, which make it easy to obtain sufficient effects of decomposing or reducing dinitrogen oxide.

### BRIEF DESCRIPTION OF DRAWINGS

FIG. 1 is a schematic diagram illustrating a configuration of an internal combustion engine system according to Embodiment 1.
FIG. 2 is a schematic diagram illustrating a configuration of a dinitrogen oxide purification system according to Embodiment 1.
FIG. 3 is a graph presenting examples of actual values for dinitrogen oxide purification rates at various temperatures of a catalyst in the dinitrogen oxide purification system according to Embodiment 1.
FIG. 4 is a graph presenting examples of actual values for the dinitrogen oxide purification rates with various materials for the catalyst in the dinitrogen oxide purification system according to Embodiment 1.
FIG. 5 is a graph presenting examples of actual values for the dinitrogen oxide purification rates with various materials for the catalyst in the dinitrogen oxide purification system according to Embodiment 1.
FIG. 6 is a graph presenting examples of actual values for the dinitrogen oxide purification rates with various materials for the catalyst in the dinitrogen oxide purification system according to Embodiment 1.
FIG. 7 is a graph presenting examples of actual values for the dinitrogen oxide purification rates with various materials for the catalyst in the dinitrogen oxide purification system according to Embodiment 1.
FIG. 8 is a graph presenting examples of actual values for the dinitrogen oxide purification rates with various compositions of a gas that acts on the catalyst in the dinitrogen oxide purification system according to Embodiment 1.
FIG. 9 is a graph presenting an example of actual values for the dinitrogen oxide purification rates, measured while changing the composition of the gas that acts on the catalyst in the dinitrogen oxide purification system according to Embodiment 1.
FIG. 10 is a graph presenting an example of actual values for the dinitrogen oxide purification rates with various compositions of the gas that acts on the catalyst in the dinitrogen oxide purification system according to Embodiment 1.
FIG. 11 is a graph presenting examples of actual values for the dinitrogen oxide purification rates at various space velocities of the gas that acts on the catalyst in the dinitrogen oxide purification system according to Embodiment 1.
FIG. 12 is a graph presenting an example of actual values for the dinitrogen oxide purification rates at various electric current values flowing through the catalyst in the dinitrogen oxide purification system according to Embodiment 1.
FIG. 13 is a graph presenting an example of actual values for the dinitrogen oxide purification rates at various electric current values flowing through the catalyst in the dinitrogen oxide purification system according to Embodiment 1.
FIG. 14 is a graph presenting an example of actual values for the dinitrogen oxide purification rates in a case using a reducing agent in the dinitrogen oxide purification system according to Embodiment 1.
FIG. 15 is a graph presenting an example of actual values for the dinitrogen oxide purification rates in a case using a reducing agent in the dinitrogen oxide purification system according to Embodiment 1.
FIG. 16 is a graph presenting examples of actual values for the dinitrogen oxide purification rates in a case using hydrogen as a reducing agent in the dinitrogen oxide purification system according to Embodiment 1.
FIG. 17 is a graph presenting examples of actual values for the dinitrogen oxide purification rates in a case using ammonia as a reducing agent in the dinitrogen oxide purification system according to Embodiment 1.
FIG. 18 is a graph presenting an example of actual values for the dinitrogen oxide purification rates in a case using a reducing agent in the dinitrogen oxide purification system according to Embodiment 1.
FIG. 19 is a graph presenting examples of actual values for the dinitrogen oxide purification rates with various materials for the catalyst in a case using a reducing agent in the dinitrogen oxide purification system according to Embodiment 1.

### DESCRIPTION OF EMBODIMENTS

The embodiment of the present invention will be explained below with reference to the accompanying drawings. The following embodiment is an example embodying the present invention and is not intended to limit the technical scope of the present invention. In the accompanying drawings, illustrations of detailed shapes and the like in each section are omitted as appropriate.

### (Embodiment 1)

### [1] Overall Configuration of Internal Combustion Engine System

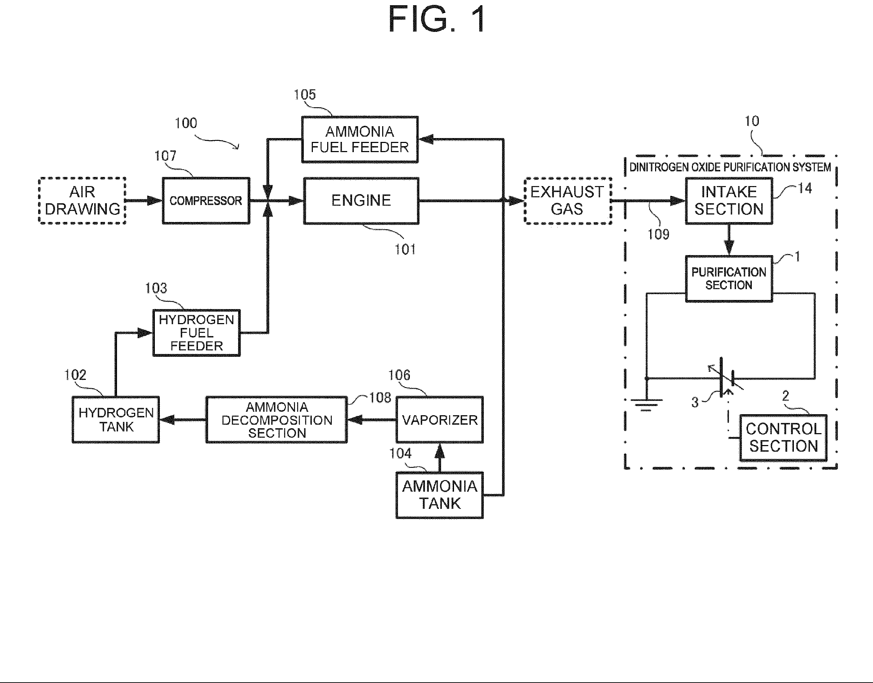

First, the overall configuration of an internal combustion engine system 100 according to this embodiment will be explained with reference to FIG. 1. In FIG. 1, a configuration of each section in the internal combustion engine system 100 is schematically illustrated, and a flow of a gas or a liquid is indicated by a bold arrow.

As illustrated in FIG. 1, the internal combustion engine system 100 according to this embodiment includes an engine 101 that is a main component of the internal combustion engine system 100. The term "engine" herein includes an internal combustion engine that is a heat engine for generating a mechanical energy (dynamic power) by combusting a fuel and that is a prime mover in which the fuel burns inside the engine and a combustion gas is used as a working gas to convert a thermal energy into a mechanical energy. In other words, the engine 101 generates a dynamic power (mechanical energy) by using a supplied fuel.

In this embodiment, the internal combustion engine system 100 for use in vessels will be explained as an example. That means, the internal combustion engine system 100 is mounted on a hull of a vessel. The engine 101 of the internal combustion engine system 100 is used as a drive source for generating a propelling power to propel the hull. According to this embodiment, the engine 101 of the internal combustion engine system 100 is also usable as a drive source for driving a generator to generate an electric energy (electric power) for use in the hull. That means, the engine 101 of the internal combustion engine system 100 is used for generating a propelling power of the hull or as a drive source for driving the generator of the hull. The electric energy generated by the generator may be stored in a power storage device.

The vessel is a moving body that sails (navigates) on water, such as ocean, lake, and river. In this embodiment, as an example, the vessel sails a relatively long distance on a single fuel supply like an ocean-going vessel. The full of the vessel has a propeller. The propeller is connected to the engine 101 of the internal combustion engine system 100 via the propeller shaft. The vessel receives a dynamic power generated by the engine 101 to rotate the propeller around the propeller shaft, thereby generating a propelling power for moving the hull forward or rearward.

In this embodiment, the vessel is configured to work in response to an operation (including a remote operation) performed by a person (navigator), and in particular, the vessel is of a manned type that can be boarded by a person as a navigator. Thus, the hull of the vessel has an operation panel that is operated by the navigator, and the engine 101 of the internal combustion engine system 100 is driven in response to the operation on the operation panel. Thereby, in the vessel, the engine 101 is driven in response to the navigator's operation to rotate the propeller, so that the hull can be moved forward or rearward. The hull further includes various inboard facilities such as a rudder mechanism, a display unit, a communication unit, and a lighting facility.

Incidentally, the engine 101 according to this embodiment is an engine using hydrogen as a fuel or a combustion improver. That means, in the internal combustion engine system 100, hydrogen stored in a hydrogen tank 102 is fed to the engine 101 by a hydrogen fuel feeder 103 to drive the engine 101. In particular, as an example of the engine 101, a mixed combustion engine that burns a fuel gas of a mixture of hydrogen (H₂) and ammonia (NH₃) will be explained. Furthermore, the engine 101 is a lean combustion (lean burn) engine that causes combustion at an air-fuel ratio leaner (excessive air) than the stoichiometric air-fuel ratio. Thus, in the internal combustion engine system 100 according to this embodiment, ammonia stored in an ammonia tank 104 is fed to the engine 101 by an ammonia fuel feeder 105. As a result, hydrogen and ammonia are fed to the engine 101, and the engine 101 is driven using hydrogen and ammonia as fuels.

This engine 101 is a type of ammonia engines using ammonia as a main fuel, and has an advantage that the carbon dioxide emission can be decreased compared to engines using fossil fuels (e.g. light oil or gasoline) as a main fuel. Furthermore, in this engine 101, since both hydrogen and ammonia are used as a fuel (or combustion improver), the ammonia's disadvantages of difficulty in ignition and combustion can be compensated by hydrogen. In other words, by using the mixed gas of ammonia and hydrogen, the engine 101 can be easily used in a wide operation range (load range), because, while ammonia is used as the fuel, combustibility is improved compared to the case using only ammonia as the fuel. A combustion efficiency of the engine 101 is easier to properly control compared to the case using only hydrogen as the fuel, and therefore it is easy to prevent abnormal combustion to achieve a high power output.

In the internal combustion engine system 100 according to this embodiment, hydrogen obtained by decomposing ammonia is fed as the fuel (or combustion improver) to the engine 101. For this reason, an ammonia decomposition section 108 for decomposing ammonia is used. In the ammonia decomposition section 108, ammonia is decomposed to obtain hydrogen and nitrogen. That means, once ammonia (NH₃) is fed to the ammonia decomposition section 108, hydrogen (H₂) and nitrogen (N₂), as well as residual ammonia (NH₃) that has not been decomposed but remained are output from the ammonia decomposition section 108. As described above, the internal combustion engine system 100 according to this embodiment includes the ammonia decomposition section 108 and the engine 101. The engine 101 is driven by receiving the gas (hydrogen) output from the ammonia decomposition section 108.

Specifically, the internal combustion engine system 100 includes the engine 101, the hydrogen tank 102, the hydrogen fuel feeder 103, the ammonia tank 104, and the ammonia fuel feeder 105, as well as the ammonia decomposition section 108, a vaporizer 106, and a compressor 107. The ammonia tank 104 stores liquid ammonia (liquefied ammonia). The vaporizer 106 vaporizes liquefied ammonia in the ammonia tank 104 and feeds ammonia in a gaseous form to the ammonia decomposition section 108. The ammonia decomposition section 108 outputs the gas (hydrogen) obtained by decomposing ammonia to the hydrogen tank 102. As a result, hydrogen as the fuel to be fed to the engine 101 is generated from ammonia in the ammonia decomposition section 108 and stored (temporarily) in the hydrogen tank 102. The compressor 107 compresses air (atmosphere) drawn from the circumference of the internal combustion engine system 100 to feed the compressed air together with the fuel (hydrogen and ammonia) to the engine 101.

The internal combustion engine system 100 configured as above makes it possible to feed hydrogen as the fuel for the engine 101 efficiently and safely. That means, ammonia has a higher volume energy density compared to hydrogen and is liquefied under a mild condition. Thus, in the internal combustion engine system 100, ammonia stored in the ammonia tank 104 is decomposed each time in the ammonia decomposition section 108 to obtain hydrogen, so that the volume energy density of the stored material can be improved compared to the case that hydrogen as the fuel is stored in the form of the compressed gas or liquid. Thus, if the capacity of the tank (ammonia tank 104) is the same as for the case of storing hydrogen only, more fuel can be stored compared to the case of storing hydrogen only, and if the fuel (hydrogen) is stored in the same amount as in the case of storing hydrogen only, it is sufficient to use a tank (ammonia tank 104) smaller than the tank for storing hydrogen only. As described above, it is useful that hydrogen as the fuel can be efficiently (in a smaller tank) and safely fed, particularly in a vessel that sails a relatively long distance on a single fuel supply like an ocean-going vessel.

As described above, in the internal combustion engine system 100 according to this embodiment, hydrogen obtained in the ammonia decomposition section 108 is used as at least a part of the fuel for the engine 101. Consequently, hydrogen as the fuel for the engine 101 can be fed efficiently and safely.

Furthermore, for the engine 101, hydrogen obtained in the ammonia decomposition section 108 and ammonia are used as the fuel. This makes it possible to decrease the carbon dioxide emission compared to engines using fossil fuels (e.g. light oil or gasoline) as a main fuel. Furthermore, by using ammonia and hydrogen as the fuel, combustibility is improved compared to the case using only ammonia as the fuel, and the engine 101 can be easily used in a wide operation range (load range). Thereby it is easy to prevent abnormal combustion and achieve high power output compared to the case using only hydrogen as the fuel.

In this embodiment, ammonia as the fuel for the engine 101 is stored in a tank (ammonia tank 104) common with ammonia that is decomposed in the ammonia decomposition section 108. In other words, ammonia as the fuel contained (stored) in one ammonia tank 104 is fed to the engine 101 by the ammonia fuel feeder 105, and meanwhile fed to the ammonia decomposition section 108 by the vaporizer 106 and decomposed. Thus, while using hydrogen and ammonia as the fuel for the engine 101, the sources for these two types of fuels can be stored in one tank (ammonia tank 104), and the tank can be made more compact and easier to refill.

The internal combustion engine system 100 according to this embodiment includes the engine 101, the hydrogen tank 102, the hydrogen fuel feeder 103, the ammonia tank 104, the ammonia fuel feeder 105, the ammonia decomposition section 108, the vaporizer 106, and the compressor 107, as well as a dinitrogen oxide purification system 10. That means, the internal combustion engine system 100 includes the dinitrogen oxide purification system 10 and the engine 101. The dinitrogen oxide purification system 10 is disposed in an exhaust gas path 109 leading from the engine 101. The dinitrogen oxide purification system 10 takes in the exhaust gas from the engine 101 and decomposes or reduces the dinitrogen oxide (N₂O) in the exhaust gas to purify dinitrogen oxide contained in the exhaust gas.

In short, in the internal combustion engine system 100 according to this embodiment, at least ammonia is used as the fuel for the engine 101. Thus, there is an advantage that carbon dioxide emission from the engine 101 can be decreased compared to engines using fossil fuels (e.g. light oil or gasoline) as a main fuel. On the other hand, the exhaust gas emitted from the engine 101 may contain dinitrogen oxide (nitrous oxide) that is a greenhouse gas. It is known that dinitrogen oxide has a greenhouse effect about 265 times greater than carbon dioxide (CO₂). Ammonia engines using ammonia as a main fuel have a major technical problem of (dinitrogen oxide in) exhaust gas purification. In the internal combustion engine system 100 according to this embodiment, the dinitrogen oxide purification system 10 can be disposed in the exhaust gas path 109 leading from this engine 101 to purify the exhaust gas.

### [2] Definitions

The term "decomposition" in the present disclosure means a type of chemical reactions, namely, a chemical decomposition in which one compound is decomposed into single components or simpler compounds, which is a reverse process to chemical synthesis. Typically, the decomposition needs to be supplied with external energy, and, depending on a source of the energy, various types of decomposition, such as thermal decomposition, photolysis, electrolysis, and radiolysis can be used. In this embodiment, as an example, the dinitrogen oxide purification system 10 decomposes dinitrogen oxide (N₂O) into oxygen (O₂) and nitrogen (N₂) using a catalyst 11.

The term "reduction" in the present disclosure means a type of chemical reactions, such as a chemical reaction in which a target substance receives electrons and a chemical reaction in which a formal oxidation number of an atom decreases. Specifically, the reduction includes a reaction in which oxygen is dissociated from a substance, a reaction in which a substance combines with hydrogen, and the like, and refers to a reverse process to oxidization. In this embodiment, as an example, nitrogen (N₂) is obtained by dissociating oxygen (O) from dinitrogen oxide (N₂O) using the catalyst 11 in the dinitrogen oxide purification system 10.

In the present disclosure, the dinitrogen oxide purification system 10 that decomposes or reduces the dinitrogen oxide only needs to decompose or reduce at least a part of the fed dinitrogen oxide, and does not necessarily decompose or reduce the whole amount of dinitrogen oxide. Dinitrogen oxide that has been fed to the dinitrogen oxide purification system 10 and nevertheless has not been decomposed or reduced but remained is also referred to as "residual dinitrogen oxide".

The term "catalyst" in the present disclosure refers to a substance that does not itself change in a chemical reaction such as decomposition but enhances the chemical reaction. Strictly, the "catalyst" interacts with the reaction in any way and, in some cases, changes itself to change the reaction path and promote the reaction. After the reaction, the "catalyst" returns to its original state, and as a result, the "catalyst" itself remains unchanged. In this embodiment, as an example, a purification section 1 of the dinitrogen oxide purification system 10 has a catalyst 11 for decomposing or reducing dinitrogen oxide to decompose or reduce dinitrogen oxide using the catalyst 11.

The term "purification rate" in the present disclosure means a rate of the amount of the compound actually purified (decomposed or reduced) to the whole amount of the compound in purification of the compound. If the amount of the compound is not changed, the higher the purification rate is, the larger the amount of the purified compound is, and the lower the purification rate is, the smaller the amount of the purified compound is. In this embodiment, as an example, the purification rate for the purification (decomposition or reduction) of dinitrogen oxide in the dinitrogen oxide purification system 10 is expressed by a percentage from "0%" to "100%". For example, in the case of the purification rate "0%", none of dinitrogen oxide fed to the dinitrogen oxide purification system 10 is purified, and the whole amount of dinitrogen oxide is residual dinitrogen oxide. Conversely, in the case of the purification rate "100%", the whole amount of dinitrogen oxide fed to the dinitrogen oxide purification system 10 is purified, and no residual dinitrogen oxide is produced. In the case of the purification rate "50%", the half amount of dinitrogen oxide fed to the dinitrogen oxide purification system 10 is purified, and the other half amount of dinitrogen oxide is residual dinitrogen oxide.

### [3] Configuration of Dinitrogen Oxide Purification System

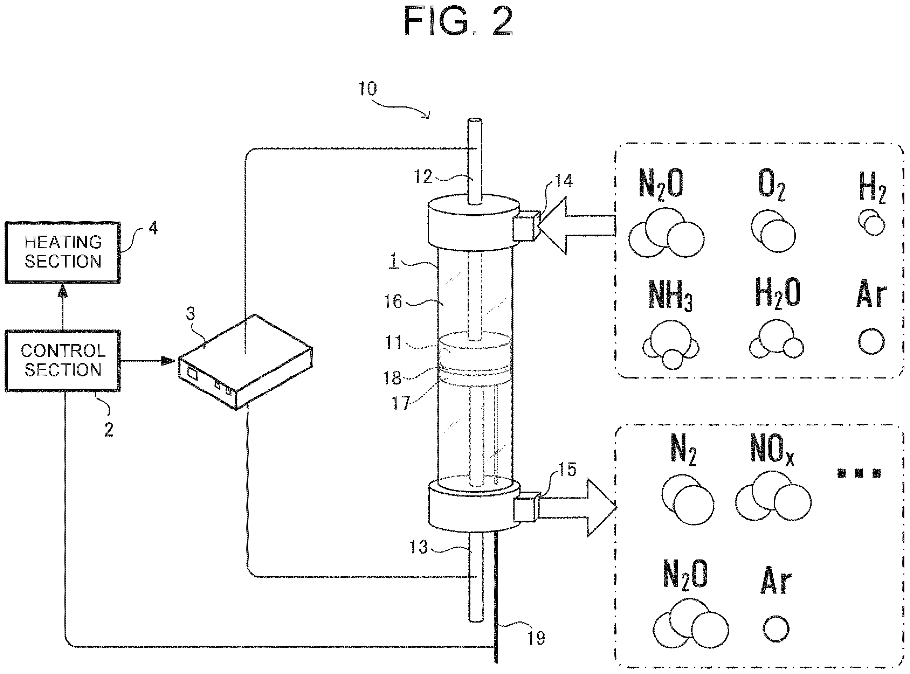

Next, the configuration of the dinitrogen oxide purification system 10 according to this embodiment will be explained with reference to FIG. 2. FIG. 2 is a schematic diagram illustrating the configuration of the purification section 1.

As a related art, a catalyst composite for removing dinitrogen oxide (N₂O) is known. In the related art, a catalyst material is incorporated into a support, and this catalyst material contains a rhodium (Rh) component carried on a ceria-based carrier. This catalyst composite shows an H₂ consumption peak at about 100°C or lower in a measurement using hydrogen temperature-programmed reduction (H₂-TPR).

However, in the catalyst composite according to the related art, for example, it is difficult to obtain sufficient effects of decomposing or reducing dinitrogen oxide in the exhaust gas from the engine 101 in a temperature range of an exhaust heat from the engine 101. That means, the exhaust gas from the engine 101 includes coexisting O₂ and/or H₂O gases in a percentage order relative to dinitrogen oxide. With dinitrogen oxide coexisting with O₂ and/or H₂O as described above, it may be difficult to obtain sufficient decomposition or reduction effects particularly in a low temperature range of exhaust heat from the engine 101, in addition to deterioration of the dinitrogen oxide purification performance due to the coexisting O₂ and/or H₂O gas effect.

Thus, for the dinitrogen oxide purification system 10 according to this embodiment, a configuration described below is adopted for the purpose of facilitating acquisition of sufficient dinitrogen oxide decomposition or reduction effects.

That means, the dinitrogen oxide purification system 10 according to this embodiment includes an intake section 14 and the purification section 1. The intake section 14 takes in dinitrogen oxide in the presence of coexisting O₂ and/or H₂O. The purification section 1 decomposes or reduces the dinitrogen oxide taken into the intake section 14. In other words, the intake section 14 takes in the gas in a state that dinitrogen oxide coexists with O₂ and/or H₂O. The purification section 1 decomposes or reduces the dinitrogen oxide in the gas taken into the intake section 14. That means, in the purification section 1, the dinitrogen oxide purification system 10 purifies (decomposes or reduces) dinitrogen oxide coexisting with O₂ and/or H₂O, fed to the intake section 14 from the outside (exhaust gas path 109). In this embodiment, as an example, the purification section 1 decomposes dinitrogen oxide into nitrogen and other gases. In other words, the dinitrogen oxide purification system 10 decomposes dinitrogen oxide to purify dinitrogen oxide.

According to the configuration described above, even in the presence of the coexisting O₂ and/or H₂O gases in a percentage order relative to dinitrogen oxide e.g. as in the case of exhaust gas from the engine 101, dinitrogen oxide can be decomposed or reduced by the purification section 1 in consideration of the influence of these coexisting gases. Consequently, the dinitrogen oxide purification system 10 has an advantage that sufficient dinitrogen oxide decomposition or reduction effects can be easily obtained.

In short, dinitrogen oxide to be purified by the dinitrogen oxide purification system 10 is fed to the dinitrogen oxide purification system 10 in a state of a gas mixed with O₂ and/or H₂O. In this case, a ratio of O₂ and/or H₂O to the mixed gas is 1% (percent by volume) or higher. Even when dinitrogen oxide is in the state of the mixed gas, the dinitrogen oxide purification system 10 can sufficiently purify (decompose or reduce) dinitrogen oxide.

In the dinitrogen oxide purification system 10 according to this embodiment, the purification section 1 has the catalyst 11 that decomposes or reduces the dinitrogen oxide as illustrated in FIG. 2. The purification section 1 further has electrodes 12 and 13 that apply an electric field to the catalyst 11. In short, in this embodiment, the purification section 1 has a pair of electrodes 12 and 13 arranged so as to sandwich the catalyst 11, and an electric field is applied to the catalyst 11 from the pair of electrodes 12 and 13. Thereby, the purification (decomposition or reduction) of dinitrogen oxide with the catalyst 11 can be enhanced compared to the case that no electric field is applied to the catalyst 11, particularly in the presence of the coexisting O₂ and/or H₂O gases, and under an environment where the temperature of the catalyst 11 is low.

Specifically, as illustrated in FIG. 2, the dinitrogen oxide purification system 10 has the purification section 1 including the catalyst 11 and the electrodes 12 and 13, and the intake section 14, as well as a power supply 3. The power supply 3 is electrically connected to the pair of electrodes 12 and 13 in the purification section 1 to apply a direct current voltage to between the pair of electrodes 12 and 13. When a direct current voltage is applied to between the pair of electrodes 12 and 13 from the power supply 3, an electric field is applied to the catalyst 11 from the pair of electrodes 12 and 13. The power supply 3 generates a direct current voltage of e.g. about several hundred volts to apply the voltage to between the pair of electrodes 12 and 13.

In this embodiment, as an example, the power supply 3 applies a direct current voltage to between the pair of electrodes 12 and 13, with the electrode 12 as a negative electrode and the electrode 13 as a positive electrode. Thereby, the power supply 3 applies a direct current voltage to between the pair of electrodes 12 and 13, with the electrode 12 on a low potential side and the electrode 13 on a high potential side. In this case, the electrode 13 on the positive electrode side is set to a reference potential point (ground), and the power supply 3 applies a negative voltage to between the pair of electrodes 12 and 13. However, the present disclosure is not limited to this configuration, and since an electric field only needs to be applied to the catalyst 11, the power supply 3 may apply a positive voltage to between the pair of electrodes 12 and 13 by setting the low potential-side electrode 12 to the ground and setting the high potential-side electrode 13 to the positive potential.

More specifically, the purification section 1 has, in addition to the catalyst 11 and the pair of electrodes 12 and 13, an outlet port 15, a cylindrical body 16, a catalyst fixing layer 17, a mesh 18, and a temperature sensor 19, as illustrated in FIG. 2.

The intake section 14 communicates with an opening of the purification section 1, through which the gas (dinitrogen oxide) to be purified in the purification section 1 is introduced. The outlet port 15 is an opening through which the gas obtained by purifying dinitrogen oxide in the purification section 1 is discharged. The cylindrical body 16 is formed e.g. in a cylindrical shape and contains at least the catalyst 11.

The intake section 14 is disposed on one end portion of the cylindrical body 16 in the longitudinal direction, and the outlet port 15 is disposed on the other end portion of the cylindrical body 16 in the longitudinal direction. This makes it possible to discharge the gas introduced from the intake section 14 from the outlet port 15 through the cylindrical body 16. Since the gas (dinitrogen oxide) is purified by the catalyst 11 accommodated in the cylindrical body 16, the gas is purified (decomposed or reduced) while passing through the cylindrical body 16.

The cylindrical body 16 accommodates the catalyst fixing layer 17 and the mesh 18. The catalyst 11 is laminated on the catalyst fixing layer 17 via the mesh 18. In this configuration, the pair of electrodes 12 and 13 are rod-shaped electrodes, and inserted into the catalyst 11 from both end portions of the cylindrical body 16 in the longitudinal direction. The temperature sensor 19 is a thermocouple as an example, which is inserted into the catalyst from the other end portion of the cylindrical body 16 in the longitudinal direction to measure a temperature of a reaction field (catalyst temperature) in real time. The catalyst temperature value measured by the temperature sensor 19 is output to a control section 2.

In this embodiment, in addition to the coexisting gases composed of O₂ and/or H₂O, an inert gas (e.g. argon) is introduced into the purification section 1 together with dinitrogen oxide. Thus, as illustrated in FIG. 2, dinitrogen oxide (N₂O), oxygen (O₂), H₂O, argon (Ar), and the like are introduced from the intake section 14, dinitrogen oxide is decomposed or reduced by the catalyst 11 in the purification section 1, and nitrogen (N₂), NOx, (residual) dinitrogen oxide (N₂O), argon (Ar), and the like are discharged from the outlet port 15. Note that, the inert gas is not necessarily used for the purification of dinitrogen oxide.

In this embodiment, a reducing agent is introduced into the purification section 1 together with dinitrogen oxide. The term "reducing agent" refers to a substance that has the effect of reducing dinitrogen oxide through a reaction with dinitrogen oxide. Examples of the reducing agent include hydrogen (H₂) and ammonia (NH₃). Thus, as illustrated in FIG. 2, in addition to dinitrogen oxide (N₂O), oxygen (O₂), H₂O, and argon (Ar), hydrogen (H₂) and ammonia (NH₃) are introduced into the intake section 14. Note that, the reducing agent is not necessarily used for the purification of dinitrogen oxide.

As explained above, since the purification section 1 of the dinitrogen oxide purification system 10 is configured such that an electric field is applied to the catalyst 11 from the (pair of) electrodes 12 and 13, the purification of dinitrogen oxide with the catalyst 11 can be enhanced, particularly in the presence of the coexisting O₂ and/or H₂O gases, and under an environment where the temperature of the catalyst 11 is low. In particular, under an environment where heat exhaustion from the engine 101 in the internal combustion engine system 100 is insufficient, it is difficult to sufficiently raise the temperature of the catalyst 11 using only the exhaust gas temperature, and the dinitrogen oxide purification performance of the catalyst 11 cannot be fully exhibited in some cases. In contrast, in a configuration that the purification of dinitrogen oxide with the catalyst 11 is enhanced even in a low-temperature range by applying an electric field to catalyst 11 as in this embodiment, originally the temperature of the catalyst 11 need not be so much raised, and the dinitrogen oxide purification performance of the catalyst 11 can be fully exhibited.

The dinitrogen oxide purification system 10 according to this embodiment further includes the control section 2. The control section 2 controls the purification rate for dinitrogen oxide in the purification section 1. That means, in the dinitrogen oxide purification system 10 according to this embodiment, the dinitrogen oxide purification rate in the purification section 1 is inconstant and can be controlled (modulated) by the control section 2. For example, the control section 2 changes the purification rate for dinitrogen oxide (dinitrogen oxide purification rate) within a variable range of "0%" or higher to "100%" or lower. If the control section 2 controls the purification rate to "0%", no dinitrogen oxide is purified (decomposed or reduced) in the purification section 1. On the other hand, if the control section 2 controls the purification rate to "100%", the whole amount of dinitrogen oxide is decomposed in the purification section 1.

According to this configuration, since the dinitrogen oxide purification system 10 according to this embodiment has a variable dinitrogen oxide purification rate in the purification section 1, dinitrogen oxide can be purified at a necessary minimum limit of purification rate e.g. depending on the state of the exhaust gas from the engine 101.

The dinitrogen oxide purification system 10 according to this embodiment further includes a heating section 4 for heating the catalyst 11. In the heating section 4, the temperature of the catalyst 11 is set to within a range of 50°C or higher and 600°C or lower. In other words, in order to increase the dinitrogen oxide purification rate of the catalyst 11, the heating section 4 heats the catalyst 11 to within a range of 50°C or higher and 600°C or lower. The heating section 4 may indirectly heat the catalyst 11 by heating dinitrogen oxide fed from the exhaust gas path 109 to the dinitrogen oxide purification system 10, or may directly heat the catalyst 11 using a heater or the like. Furthermore, in this embodiment, since an electric field is applied to the catalyst 11 as described above, the heating section 4 can achieve sufficient decomposition of dinitrogen oxide with the catalyst 11 without heating the catalyst 11 to a high temperature e.g. 300°C or higher.

Note that, the lower limit of the temperature of the catalyst 11 heated by the heating section 4 is not limited to 50°C, but may be e.g. lower than 50°C, or 100°C, 150°C, 200°C, 250°C, 300°C, etc. Similarly, the upper limit of the temperature of the catalyst 11 heated by the heating section 4 is not limited to 600°C, but may be e.g. higher than 600°C, or 350°C, 400°C, 450°C, 500°C, 550°C, etc. As an example, it is more preferable for the heating section 4 to heat the catalyst 11 to within a range of 100°C or higher and 400°C or lower.

In this embodiment, the purification section 1 is heated using the exhaust heat from the engine 101. That means, since the exhaust gas from the engine 101 is already hot (e.g. about 350°C) due to the exhaust heat from the engine 101, the purification section 1 is heated by the exhaust heat from the engine 101 when the exhaust gas is taken into the purification section 1. For this reason, the heating section 4 may heat the catalyst 11 using at least the exhaust heat from the engine 101.

As described above, the energy required to heat the catalyst 11 in the heating section 4 can be saved by making effective use of the exhaust heat from the engine 101. In particular, when the catalyst 11 is used in a low-temperature range of 300°C or lower, the catalyst 11 can be sufficiently heated using only the exhaust heat from the engine 101, therefore there is no need to install a separate heater, and it is easy to downsize and simplify the dinitrogen oxide purification system 10.

Incidentally, in the dinitrogen oxide purification system 10 according to this embodiment, the purification rate for dinitrogen oxide (dinitrogen oxide purification rate) in the purification section 1 can be controlled by the control section 2, as described above. In this case, the control section 2 changes the dinitrogen oxide purification rate in the purification section 1 by changing at least one of the temperature of the catalyst 11, the value of electric current flowing through the catalyst 11, the amount of the reducing agent, and the space velocity.

The term "space velocity (SV)" in this specification means a relationship between a volume of a reactor and a raw material feeding rate, specifically a value obtained by dividing a flow rate of dinitrogen oxide passing through the catalyst 11 by a capacity (volume) of the catalyst 11. In other words, as long as the flow rate of dinitrogen oxide is constant, the larger the size of the catalyst 11 is, the lower the space velocity is.

In short, the dinitrogen oxide purification rate is changed by changing at least one parameter of the four parameters: the temperature of the catalyst 11, the value of electric current flowing through the catalyst 11, the amount of the reducing agent, and the space velocity. As an example of this embodiment, the control section 2 is configured to be able to control all of the temperature of the catalyst 11, the value of electric current flowing through the catalyst 11, the amount of the reducing agent, and the space velocity.

For example, the control section 2 changes the purification rate (of dinitrogen oxide) by changing at least the value of electric current so that the higher the value of electric current flowing through the catalyst 11 is, the higher the purification rate (of dinitrogen oxide) is. Specifically, the control section 2 is configured to be able to control the power supply 3, and controls the level of the electric current (electric current value) flowing through the catalyst 11 by controlling the electric current level (electric current value) supplied from the power supply 3 to the purification section 1 (between the pair of electrodes 12 and 13). That means, the output current of the power supply 3 is inconstant and variable, and the value of electric current of the power supply 3 is controlled by the control section 2. The control section 2 may change the value of electric current flowing through the catalyst 11 continuously or stepwise (discontinuously).

Basically, as the output current of the power supply 3 increases, the value of electric current flowing through the catalyst 11 increases and the dinitrogen oxide purification rate increases, and therefore the purification rate for the exhaust gas from the engine 101 increases. Conversely, as the output current of the power supply 3 decreases, the value of electric current flowing through the catalyst 11 decreases and the dinitrogen oxide purification rate decreases, and therefore the purification rate for the exhaust gas from the engine 101 decreases. Thereby, the dinitrogen oxide purification rate can be controlled (modulated) with a relatively simple configuration, and furthermore, since the responsiveness of the dinitrogen oxide purification rate to the change in the value of electric current is relatively high, the control section 2 can easily control the dinitrogen oxide purification rate in real time.

The control section 2 changes the purification rate (for dinitrogen oxide) by changing at least the temperature of the catalyst 11 so that the higher the temperature of the catalyst 11 is (to a high temperature), the higher the purification rate (for dinitrogen oxide) is. Specifically, the control section 2 is configured to be able to control the heating section 4, and controls the temperature of the catalyst 11 by controlling the level of the thermal energy applied to the catalyst 11 from the heating section 4. That means, the output power of the heating section 4 is inconstant and variable, and the output power (thermal energy) is controlled by the control section 2. The control section 2 may change the temperature of the catalyst 11 continuously or stepwise (discontinuously).

Basically, as the temperature of the catalyst 11 increases, the dinitrogen oxide purification rate increases, and therefore the purification rate for the exhaust gas from the engine 101 increases. Conversely, as the temperature of the catalyst 11 decreases, the dinitrogen oxide purification rate decreases, and therefore the purification rate for the exhaust gas from the engine 101 decreases. Thereby, the dinitrogen oxide purification rate can be controlled (modulated) with a relatively simple configuration, and furthermore, since the responsiveness of the dinitrogen oxide purification rate to the change in the temperature of the catalyst 11 is relatively high, the control section 2 can easily control the dinitrogen oxide purification rate in real time.

The control section 2 changes the purification rate (for dinitrogen oxide) by changing at least the space velocity of dinitrogen oxide passing through the catalyst 11 so that the lower the space velocity of dinitrogen oxide passing through the catalyst 11 is, the higher the purification rate (for dinitrogen oxide) is. Specifically, the control section 2 is configured to be able to control the flow rate (flow velocity) of dinitrogen oxide fed to the purification section 1, and controls the space velocity of dinitrogen oxide passing through the catalyst 11 by controlling the flow rate of dinitrogen oxide fed to the purification section 1. That means, the flow rate (flow velocity) of dinitrogen oxide passing through the catalyst 11 is inconstant and variable, and the value (flow rate) is controlled by the control section 2. The control section 2 may change the flow rate of dinitrogen oxide passing through the catalyst 11 continuously or stepwise (discontinuously).

Basically, as the flow rate of dinitrogen oxide passing through the catalyst 11 decreases, the space velocity decreases and the dinitrogen oxide purification rate increases, and therefore the purification rate for the exhaust gas from the engine 101 increases. Conversely, as the flow rate of dinitrogen oxide passing through the catalyst 11 increases, the space velocity increases and the dinitrogen oxide purification rate decreases, and therefore the purification rate for the exhaust gas from the engine 101 decreases. Thereby, the dinitrogen oxide purification rate can be controlled (modulated) with a relatively simple configuration, and furthermore, since the responsiveness of the dinitrogen oxide purification rate to the flow rate of dinitrogen oxide passing through the catalyst 11 is relatively high, the control section 2 can easily control the dinitrogen oxide purification rate in real time.

Alternatively, the control section 2 may control the space velocity of dinitrogen oxide passing through the catalyst 11 by changing the size (volume) of the catalyst 11 through which dinitrogen oxide passes, in addition to or instead of the flow rate (flow velocity) of dinitrogen oxide. In other words, basically, as the size of the catalyst 11 through which dinitrogen oxide passes increases, the space velocity decreases and the dinitrogen oxide purification rate increases, and therefore the purification rate for the exhaust gas from the engine 101 increases. Conversely, as the size of the catalyst 11 through which dinitrogen oxide passes decreases, the space velocity increases and the dinitrogen oxide purification rate decreases, and therefore the purification rate of the exhaust gas from the engine 101 decreases.

The control section 2 changes the purification rate (for dinitrogen oxide) by changing the amount of the reducing agent so that the more the amount of the reducing agent is, the higher the purification rate (for dinitrogen oxide) is. Specifically, the control section 2 is configured to be able to control the amount of the reducing agent (e.g. hydrogen and ammonia) put into the purification section 1, and controls the amount of the reducing agent. The control section 2 may change the amount of the reducing agent continuously or stepwise (discontinuously).

Basically, as the amount of the reducing agent increases, the dinitrogen oxide purification rate increases, and therefore the purification rate for the exhaust gas from the engine 101 increases. Conversely, as the amount of the reducing agent decreases, the dinitrogen oxide purification rate decreases, and therefore the purification rate for the exhaust gas from engine 101 decreases. Thereby, the dinitrogen oxide purification rate can be controlled (modulated) with a relatively simple configuration, and furthermore, since the responsiveness of the dinitrogen oxide purification rate to the change in the amount of the reducing agent is relatively high, the control section 2 can easily control the dinitrogen oxide purification rate in real time.

In this case, the catalyst 11 has an active metal and a catalyst carrier. The active metal is at least one of rhodium (Rh), palladium (Pd), platinum (Pt), iron (Fe), copper (Cu), nickel (Ni), cobalt (Co), tungsten (W), and vanadium (V), and the catalyst carrier contains any of cerium (Ce), zirconium (Zr), yttrium (Y), lanthanum (La), neodymium (Nd), or praseodymium (Pr) as main ingredients. That means, the catalyst 11 contains an active metal such as rhodium, and a catalyst carrier made of an oxide of cerium or the like.

More specifically, in this embodiment, the oxide as the catalyst carrier is either CeO₂ or CeₓZr₍₁₋ₓ₎O₂. In the formulas, "x" represents any value in a range from "0" or larger and "1" or smaller (i.e. "0≤x≤1"). For example, if the oxide is CeₓZr₍₁₋ₓ₎O₂, the catalyst contains Ce_{0.5}Zr_{0.5}O₂ or the like.

In the dinitrogen oxide purification system 10 configured as above, a dinitrogen oxide purification method is embodied, which includes taking in dinitrogen oxide in the presence of coexisting O₂ and/or H₂O, and decomposing or reducing the taken-in dinitrogen oxide (coexisting with O₂ and/or H₂O). Such a dinitrogen oxide purification method may be embodied without using the dinitrogen oxide purification system 10.

### [4] Actual Value

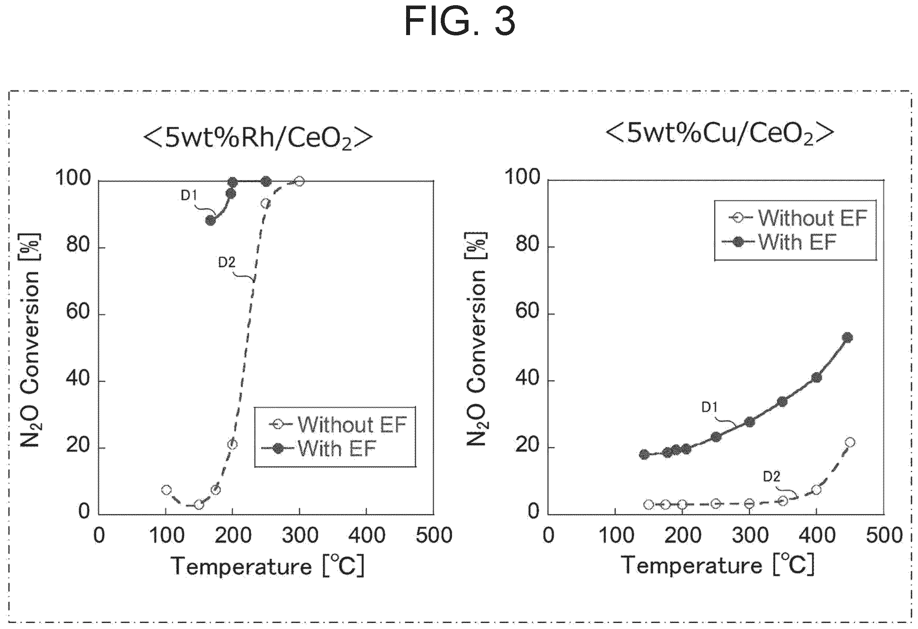

With reference to FIG. 3 to FIG. 19, the actual values of the dinitrogen oxide purification rate will be explained below for the case that the temperature of the catalyst 11, the value of electric current flowing through the catalyst 11, the amount of the reducing agent, the space velocity (flow rate of dinitrogen oxide passing through the catalyst 11 or the amount of the catalyst 11), or the like is varied in the dinitrogen oxide purification system 10 according to this embodiment. Also, the actual values of the dinitrogen oxide purification rate in the case that the materials for the catalyst 11, or the like are varied will be explained below, because the dinitrogen oxide purification rate varies also depending on the materials (components) for the catalyst 11, or the like. FIG. 3 to FIG. 19 are graphs presenting examples of the actual values, in which various parameters such as the temperature of the catalyst 11 are plotted on the abscissa and the purification rate for dinitrogen oxide (dinitrogen oxide purification rate) is plotted on the ordinate.

FIG. 3 is a graph presenting the actual values for dinitrogen oxide purification rates at various temperatures (abscissa) of the catalyst 11. The test conditions other than the temperature of the catalyst 11 in FIG. 3 are as follows (in the case of "with electric field"): the value of electric current flowing through the catalyst 11 is "3 mA", the amount of the catalyst 11 is "356 mg", the flow rate of dinitrogen oxide is "200 mL/min", and the reaction pressure is "atmospheric pressure". The composition of the gas that acts on the catalyst 11 is "dinitrogen oxide (N₂O): 1000 ppm, oxygen (O₂): 10%, argon (Ar): balance". A graph in the case that the material for the catalyst 11 is "5 wt% Rh/CeO₂" is presented on the left side of FIG. 3, and a graph in the case that the material for the catalyst 11 is "5 wt% Cu/CeO₂" is presented on the right side of FIG. 3. In FIG. 3, D1 represents data for "with electric field" in which an electric field is applied to the catalyst 11, and D2 represents data for "without electric field" in which no electric field is applied to the catalyst 11.

As is clear from FIG. 3, in the case that the material for the catalyst 11 is "5 wt% Rh/CeO₂", there is a tendency that the higher the temperature of the catalyst 11 is, the higher the dinitrogen oxide purification rate is. Furthermore, when the temperature of the catalyst 11 is within a range of "300°C" or lower, the purification (decomposition or reduction) of dinitrogen oxide is enhanced, and the effect of increasing the dinitrogen oxide purification rate is more pronounced in the case of "with electric field" than in the case of "without electric field". For example, when the temperature of the catalyst 11 is as low as "200°C", the dinitrogen oxide purification rate is approximately "20%" in the case of "without electric field", and, on the other hand, the dinitrogen oxide purification rate is close to "100%" in the case of "with electric field". Even when using inexpensive copper (Cu) as the active metal for the catalyst 11, it was confirmed that the effect of the electric field was exhibited.

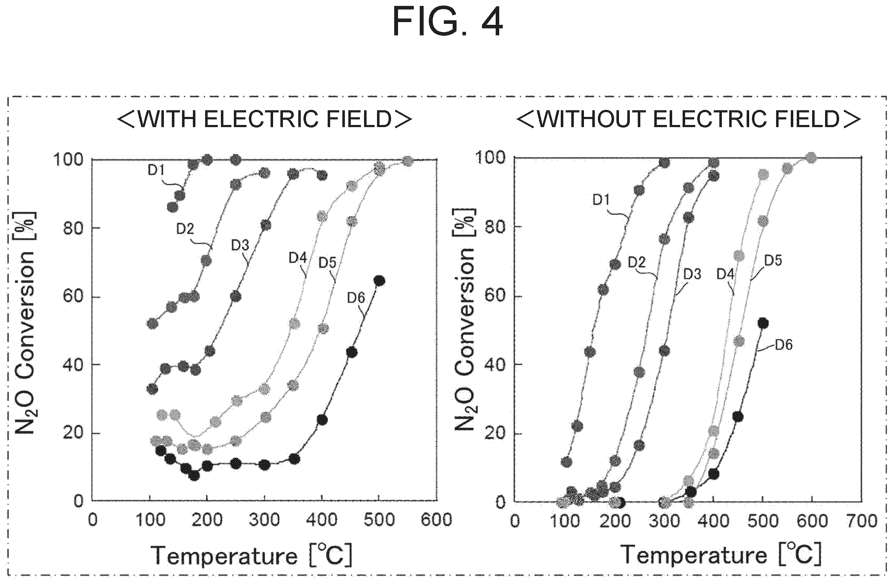

FIG. 4 is a graph presenting actual values for the dinitrogen oxide purification rates with various materials (components) for the catalyst 11. The test conditions other than the temperature of the catalyst 11 in FIG. 4 are as follows (in the case of "with electric field"): the value of electric current flowing through the catalyst 11 is "6 mA", the amount of the catalyst 11 is "200 mg", the flow rate of dinitrogen oxide is "100 mL/min", and the reaction pressure is "atmospheric pressure". The composition of the gas that acts on the catalyst 11 is "dinitrogen oxide (N₂O): 1000 ppm, oxygen (O₂): 10%, argon (Ar): balance". Data for the case of "with electric field" is presented on the left side of FIG. 4, and data for the case of "without electric field" is presented on the right side of FIG. 4. In FIG. 4, the amount of the carried catalyst 11 is "5 wt%", the catalyst carrier is "CeO₂", D1 represents data for the case that the active metal is Rh, D2 represents data for the case that the active metal is Pd, D3 represents data for the case that the active metal is Pt, D4 represents data for the case that the active metal is Fe, D5 represents data for the case that the active metal is Ni, and D6 represents data for the case that the active metal is Cu.

As is clear from FIG. 4, the sensitivity of dinitrogen oxide purification enhancement to the temperature varies depending on the material (active metal) for the catalyst 11. With regard to the active metal for the catalyst 11, the noble metals (Rh, Pd, Pt) are superior to the base metals (Fe, Cu, Ni) in terms of the purification rate.

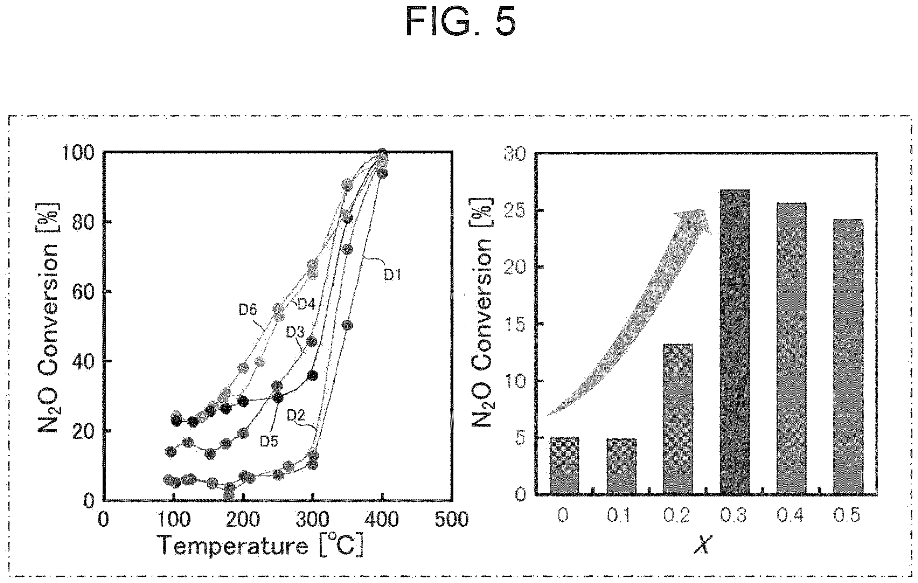

FIG. 5 is a graph presenting actual values for the dinitrogen oxide purification rates with various materials (components) for the catalyst 11. The test conditions other than the temperature of the catalyst 11 in FIG. 5 are as follows: the value of electric current flowing through the catalyst 11 is "6 mA", the amount of the catalyst 11 is "200 mg", the flow rate of dinitrogen oxide is "100 mL/min", and the reaction pressure is "atmospheric pressure". The composition of the gas that acts on the catalyst 11 is "dinitrogen oxide (N₂O): 1000 ppm, oxygen (O₂): 10%, argon (Ar): balance". Data for the case that the temperature of the catalyst 11 is changed are presented on the left side of FIG. 5, and results of extracting data for the case that the temperature of the catalyst 11 is "150°C" and arranging the results in a bar graph form for each of values x of the catalyst carrier for catalyst 11 are presented on the right side of FIG. 5. In FIG. 5, the amount of the carried catalyst 11 is "5 wt%" the active metal is Rh, D1 represents data for the case that "x" in the catalyst carrier "Ce₍₁₋ₓ₎ZrₓO₂" is "0", D2 represents data for the case that "x" is "0.1", D3 represents data for the case that "x" is "0.2", D4 represents data for the case that "x" is "0.3", D5 represents data for the case that "x" is "0.4", and D6 represents data for the case that "x" is "0.5".

As is clear from FIG. 5, the sensitivity of dinitrogen oxide purification enhancement to the temperature varies depending on the material (catalyst carrier) of the catalyst 11. With regard to the catalyst carrier for the catalyst 11, the catalyst carrier containing zirconium (Zr) is superior to the catalyst carrier containing no zirconium in terms of the purification rate.

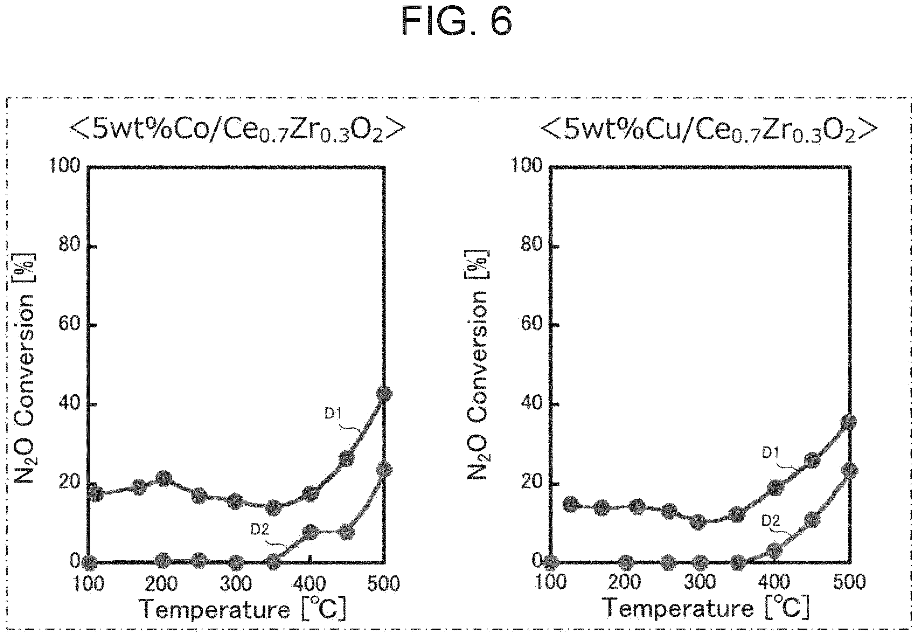

FIG. 6 is a graph presenting actual values for the dinitrogen oxide purification rates with various materials (components) for the catalyst 11. The test conditions other than the temperature of the catalyst 11 in FIG. 6 are as follows (in the case of "with electric field"): the value of electric current flowing through the catalyst 11 is "6 mA", the amount of the catalyst 11 is "200 mg", the flow rate of dinitrogen oxide is "100 mL/min", and the reaction pressure is "atmospheric pressure". The composition of the gas that acts on the catalyst 11 is "dinitrogen oxide (N₂O): 1000 ppm, oxygen (O₂): 10%, argon (Ar): balance". In FIG. 6, the amount of the carried catalyst 11 is "5 wt%", the catalyst carrier is "Ce_{0.7}Zr_{0.3}O₂", data for the case that the active metal is Co are presented on the left side of FIG. 6, and data for the case that the active metal is Cu are presented on the right side of FIG. 6. In FIG. 6, D1 represents data for "with electric field", and D2 represents data for "without electric field".

As is clear from FIG. 6, the sensitivity of dinitrogen oxide purification enhancement to the temperature varies depending on the material (active metal) for the catalyst 11.

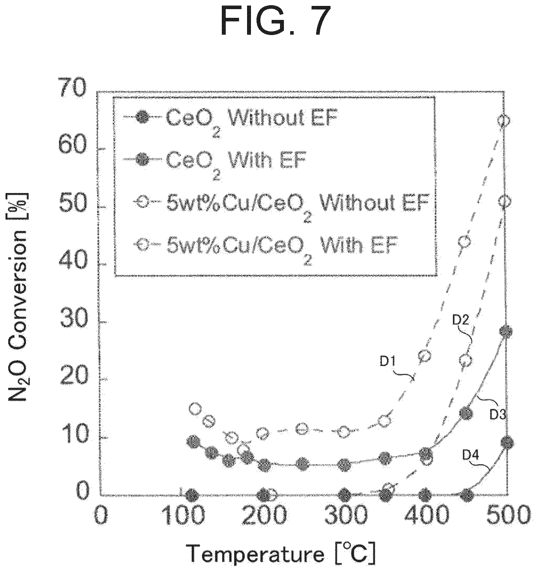

FIG. 7 is a graph presenting actual values for the dinitrogen oxide purification rates with various materials (components) for the catalyst 11. The test conditions other than the temperature of the catalyst 11 in FIG. 7 are as follows (in the case of "with electric field"): the value of electric current flowing through the catalyst 11 is "6 mA", the amount of the catalyst 11 is "200 mg", the flow rate of dinitrogen oxide is "100 mL/min", and the reaction pressure is "atmospheric pressure". The composition of the gas that acts on the catalyst 11 is "dinitrogen oxide (N₂O): 1000 ppm, oxygen (O₂): 10%, argon (Ar): balance". In FIG. 7, D1 represents data for the case of "with electric field" in which an electric field is applied to the catalyst 11 including "5 wt% Cu/CeO₂", and D2 represents data for the case of "without electric field" in which no electric field is applied to the catalyst 11. D3 represents data for the case of "with electric field" in which an electric field is applied to the catalyst 11 including "CeO₂", and D4 represents data for the case of "without electric field" in which no electric field is applied to the catalyst 11.

As is clear from FIG. 7, even in the absence of the active metal, dinitrogen oxide can be purified by applying an electric field. However, the purification rate is lower than in the case with the active metal.

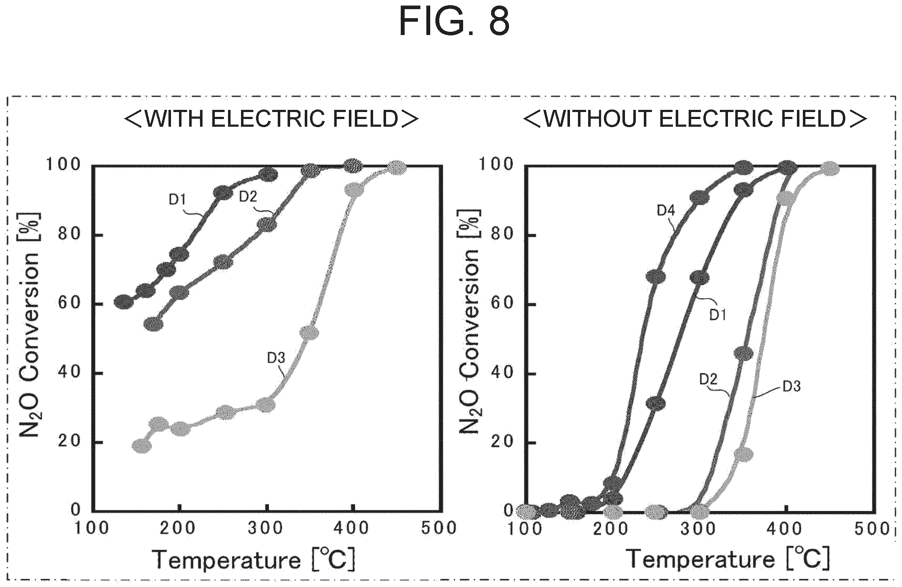

FIG. 8 is a graph presenting actual values for the dinitrogen oxide purification rates with various compositions of the gas that acts on the catalyst 11. The test conditions other than the temperature of the catalyst 11 in FIG. 8 are as follows (in the case of "with electric field"): the value of electric current flowing through the catalyst 11 is "6 mA", the material for the catalyst 11 is "5 wt% Rh/Ce_{0.7}Zr_{0.3}O₂", the amount of the catalyst 11 is "200 mg", the flow rate of dinitrogen oxide is "100 mL/min", and the reaction pressure is "atmospheric pressure". The composition of the gas that acts on the catalyst 11 is "dinitrogen oxide (N₂O): 1000 ppm, argon (Ar): balance". Data for the case of "with electric field" are presented on the left side of FIG. 8, and data for the case of "without electric field" are presented on the right side of FIG. 8. In FIG. 8, D1 represents data for the case in the presence of coexisting "oxygen (O₂): 10%", D2 represents data for the case in the presence of coexisting "water (H₂O): 10%", D3 represents data for the case in the presence of coexisting "oxygen (O₂): 10%" and "water (H₂O): 10%", and D4 represents only data for the case of "without electric field". D4 represents only data for the case of "without electric field".

As is clear from FIG. 8, the dinitrogen oxide purification rate decreases particularly due to coexisting water (H₂O), but dinitrogen oxide can be purified even in a low temperature range of 300°C or lower by applying an electric field to the catalyst 11.

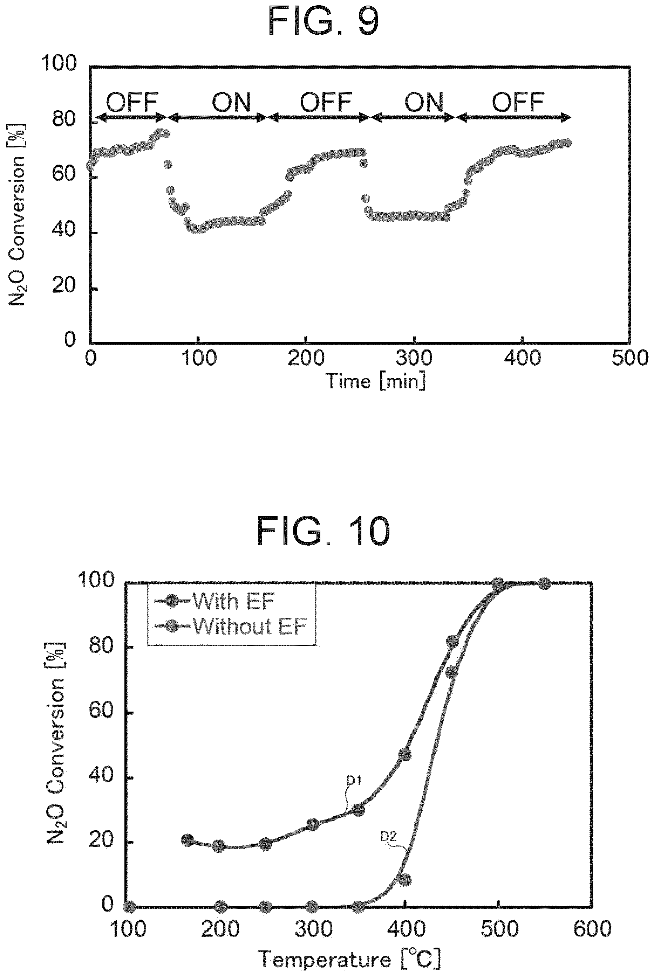

FIG. 9 is a graph presenting actual values for the dinitrogen oxide purification rates with various compositions of the gas that acts on the catalyst 11. The test conditions in FIG. 9 are as follows: the temperature of the catalyst 11 is "160°C", the value of electric current flowing through the catalyst 11 is "6 mA", the material for the catalyst 11 is "5 wt% Rh/Ce_{0.7}Zr_{0.3}O₂", the amount of the catalyst 11 is "200 mg", the flow rate of dinitrogen oxide is "100 mL/min", and the reaction pressure is "atmospheric pressure". Furthermore, data on ON/OFF of "water (H₂O): 10%" are presented on the basis of conditions that the composition of the gas that acts on the catalyst 11 is "dinitrogen oxide (N₂O): 1000 ppm, oxygen (O₂): 10%, argon (Ar): balance". That means, in FIG. 9, the gas that acts on the catalyst 11 does not contain "water (H₂O): 10%" during the period of "OFF", and the gas that acts on the catalyst 11 contains "water (H₂O): 10%" during the period of "ON".

As is clear from FIG. 9, the dinitrogen oxide purification rate decreases due to coexisting water (H₂O), but the dinitrogen oxide purification rate can be recovered by terminating addition of water (H₂O). From this, it is assumed that the catalyst 11 itself is not damaged, but the performance of the catalyst 11 is temporarily deteriorated due to the adsorption of H₂O to a reaction site of dinitrogen oxide.

FIG. 10 is a graph presenting actual values for the dinitrogen oxide purification rates with various compositions of the gas that acts on the catalyst 11. The test conditions other than the temperature of the catalyst 11 in FIG. 10 are as follows (in the case of "with electric field"): the value of electric current flowing through the catalyst 11 is "6 mA", the material for the catalyst 11 is "5 wt% Rh/Ce_{0.7}Zr_{0.3}O₂", the amount of the catalyst 11 is "200 mg", the flow rate of dinitrogen oxide is "100 mL/min", and the reaction pressure is "atmospheric pressure". The composition of the gas that acts on the catalyst 11 is "dinitrogen oxide (N₂O): 1000 ppm, oxygen (O₂): 10%, water (H₂O): 10%, carbon dioxide (CO₂): 10%, nitrogen monoxide (NO): 1000 ppm, argon (Ar): balance". In FIG. 10, D1 represents data for "with electric field", and D2 represents data for "without electric field".

As is clear from FIG. 10, even under a condition close to the actual exhaust gas including CO₂, NO_{X}, and the like, dinitrogen oxide can be purified even in a low temperature range of 300°C or lower by applying an electric field to the catalyst 11.

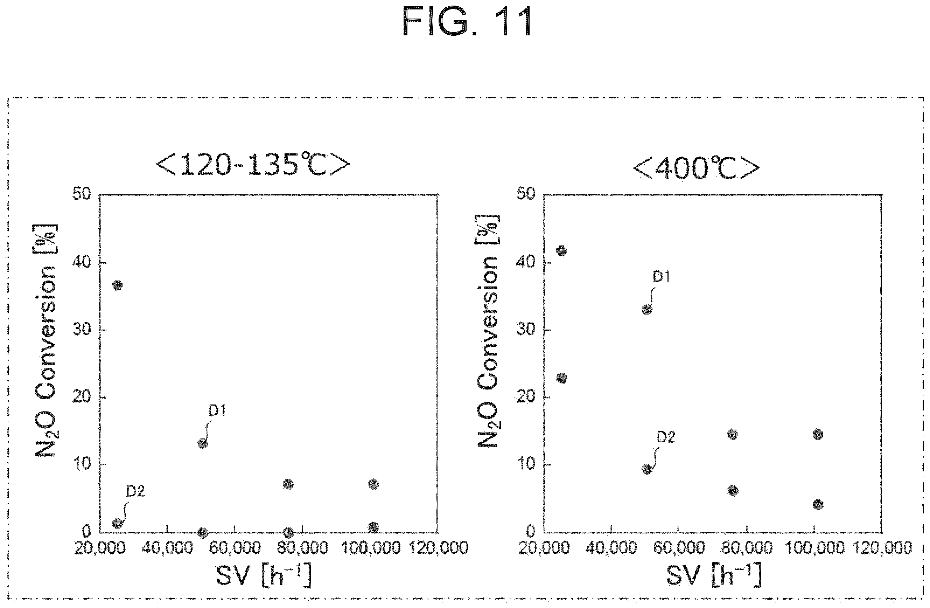

FIG. 11 is a graph presenting actual values for the dinitrogen oxide purification rates at various space velocities of the gas that acts on the catalyst 11. The test conditions in FIG. 11 are as follows (in the case of "with electric field"): the value of electric current flowing through the catalyst 11 is "6 mA", the material for the catalyst 11 is "5 wt% Cu/CeO₂", the amount of the catalyst 11 is "200 mg", and the reaction pressure is "atmospheric pressure". The composition of the gas that acts on the catalyst 11 is "dinitrogen oxide (N₂O): 1000 ppm, oxygen (O₂): 10%, argon (Ar): balance". In this case, the space velocity (SV) is changed by changing the flow rate of dinitrogen oxide within a range from "50 mL/min" to "200 mL/min". Data for the case that the temperature of the catalyst 11 is 120 to 135°C are presented on the left side of FIG. 11, and data for the case that the temperature of the catalyst 11 is 400°C are presented on the right side of FIG. 11. In FIG. 11, D1 represents data for "with electric field", and D2 represents data for "without electric field".

As is clear from FIG. 11, application of an electric field to the catalyst 11 makes it possible to control the reaction by changing the space velocity even in a low temperature range of about 130°C.

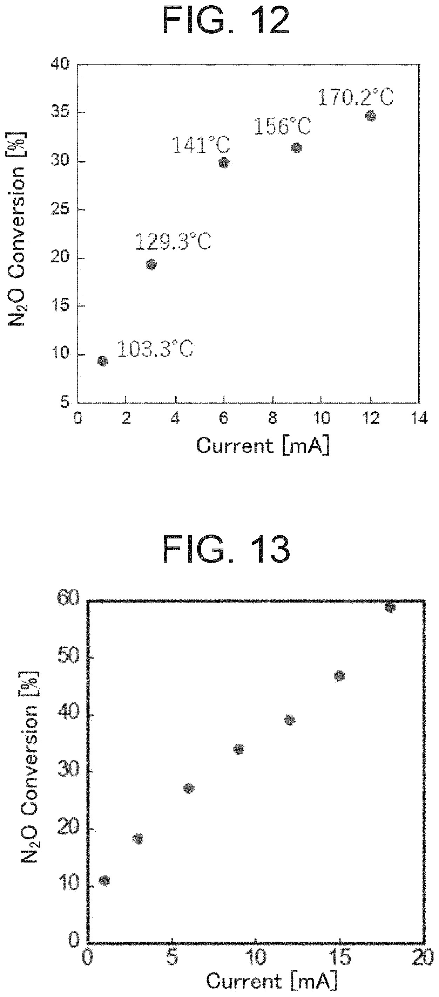

FIG. 12 is a graph presenting actual values for the dinitrogen oxide purification rates with various electric current values flowing through the catalyst 11. The test conditions other than the value of electric current in FIG. 12 are as follows: the material for the catalyst 11 is "5 wt% Cu/CeO₂", the amount of the catalyst 11 is "200 mg", the flow rate of dinitrogen oxide is "100 mL/min", and the reaction pressure is "atmospheric pressure". The composition of the gas that acts on the catalyst 11 is "dinitrogen oxide (N₂O): 1000 ppm, oxygen (O₂): 10%, argon (Ar): balance". FIG. 12 presents data for the cases that the temperature of the catalyst 11 is "103.3°C", "129.3°C", "141°C", "156°C", or "170.2°C".

As is clear from FIG. 12, the dinitrogen oxide purification rate in a low temperature range is increased by raising the value of electric current flowing through the catalyst 11 even in a low temperature range of about 130°C.

FIG. 13 is a graph presenting actual values for the dinitrogen oxide purification rates with various electric current values flowing through the catalyst 11. The test conditions other than the value of electric current in FIG. 13 are as follows: the material for the catalyst 11 is "5 wt% Rh/Ce_{0.7}Zr_{0.3}O₂", the amount of the catalyst 11 is "200 mg", the flow rate of dinitrogen oxide is "100 mL/min", and the reaction pressure is "atmospheric pressure". The composition of the gas that acts on the catalyst 11 is "dinitrogen oxide (N₂O): 1000 ppm, oxygen (O₂): 10%, water (H₂O): 10%, carbon dioxide (CO₂): 10%, nitrogen monoxide (NO): 1000 ppm, argon (Ar): balance".

As is clear from FIG. 13, even under a condition close to the actual exhaust gas including CO₂, NO_{X}, and the like, the dinitrogen oxide purification rate in a low temperature range is increased by raising the value of electric current flowing through the catalyst 11.

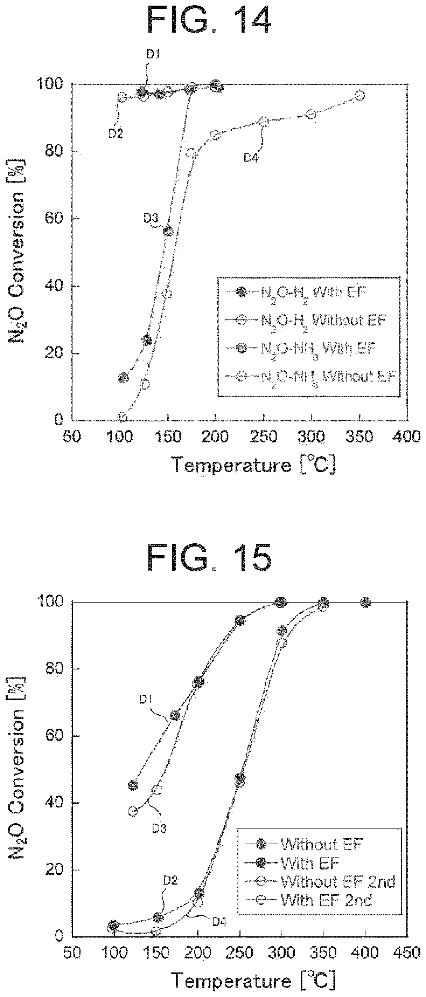

FIG. 14 is a graph presenting actual values for the dinitrogen oxide purification rates in a case using a reducing agent. The test conditions other than the temperature of the catalyst 11 in FIG. 14 are as follows (in the case of "with electric field"): the value of electric current flowing through the catalyst 11 is "3 mA", the material for the catalyst 11 is "5 wt% Rh/CeO₂", the amount of the catalyst 11 is "100 to 150 mg", the flow rate of dinitrogen oxide is "200 mL/min", and the reaction pressure is "atmospheric pressure". When using hydrogen (H₂) as the reducing agent, the composition of the gas that acts on the catalyst 11 is, "dinitrogen oxide (N₂O): 1000 ppm, hydrogen (H₂): 1000 ppm, argon (Ar): balance", and when using ammonia (NH₃) as the reducing agent, the composition is "dinitrogen oxide (N₂O): 1500 ppm, ammonia (NH₃): 1000 ppm, argon (Ar): balance". In FIG. 14, D1 represents data for "with electric field", and D2 represents data for "without electric field", in the case using hydrogen (H₂) as the reducing agent. In FIG. 14, D3 represents data for the case of "with electric field", and D4 represents data for the case of "without electric field", in the case using ammonia (NH₃) as the reducing agent.

As is clear from FIG. 14, by using "5 wt% Rh/CeO₂" as the catalyst 11, the reduction reaction originally progresses from a low temperature in the absence of coexisting oxygen (O₂) or water (H₂O), and the reactivity with ammonia (NH₃) is slightly improved by the electric field.

FIG. 15 is a graph presenting actual values for the dinitrogen oxide purification rates in a case using a reducing agent. The test conditions other than the temperature of the catalyst 11 in FIG. 15 are as follows (in the case of "with electric field"): the value of electric current flowing through the catalyst 11 is "3 mA", the material for the catalyst 11 is "5 wt% Cu/CeO₂", the amount of the catalyst 11 is "356 mg", the flow rate of dinitrogen oxide is "200 mL/min", and the reaction pressure is "atmospheric pressure". The composition of the gas that acts on the catalyst 11 is "dinitrogen oxide (N₂O): 1500 ppm, ammonia (NH₃): 1000 ppm, argon (Ar): balance". In FIG. 15, D1 represents data for "with electric field", and D2 represents data for "without electric field". D3 and D4 represent data on the second test in the cases of "with electric field" and the case of "without electric field", respectively.

As is clear from FIG. 15, even when copper (Cu) is used as the active metal for the catalyst 11, the reduction reaction in a low temperature range is significantly improved by the electric field in the absence of coexisting oxygen (O₂) or water (H₂O), and the effect of the electric field is greater than in the case using rhodium (Rh) as the active metal.

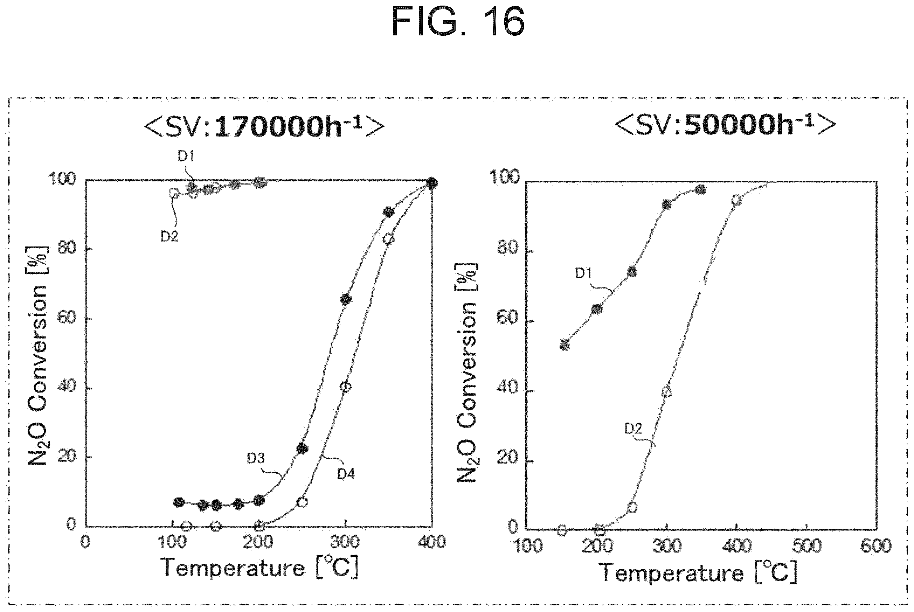

FIG. 16 is a graph presenting actual values for the dinitrogen oxide purification rates in a case using hydrogen (H₂) as a reducing agent. The test conditions other than the temperature of the catalyst 11 in FIG. 16 are as follows (in the case of "with electric field"): the value of electric current flowing through the catalyst 11 is "3 mA" or "6 mA", the amount of the catalyst 11 is "100 mg" or "200 mg", the flow rate of dinitrogen oxide is "100 mL/min" or "200 mL/min", and the reaction pressure is "atmospheric pressure". The composition of the gas that acts on the catalyst 11 is "dinitrogen oxide (N₂O): 1000 ppm, hydrogen (H₂): 1000 ppm, argon (Ar): balance". On the left side of FIG. 16, D1 represents data for "with electric field", and D2 represents data for "without electric field", in the case that the material for the catalyst 11 is "5 wt% Rh/CeO₂" and the space velocity (SV) is "17000h-1". D3 and D4 represent data for the cases of "with electric field" and "without electric field" respectively in the presence of coexisting 10% oxygen (O₂). On the right side of FIG. 16, D1 represents data for "with electric field", and D2 represents data for "without electric field", in the case that the material for the catalyst 11 is "1 wt% Rh/CeO₂" and the space velocity (SV) is "5000 h-1" in the presence of coexisting 10% oxygen (O₂).

As is clear from FIG. 16, the reduction reaction with the reducing agent (H₂) is significantly deteriorated due to coexisting oxygen (O₂), but the dinitrogen oxide purification rate in a low temperature range can be sufficiently ensured by modulating the space velocity or the like.

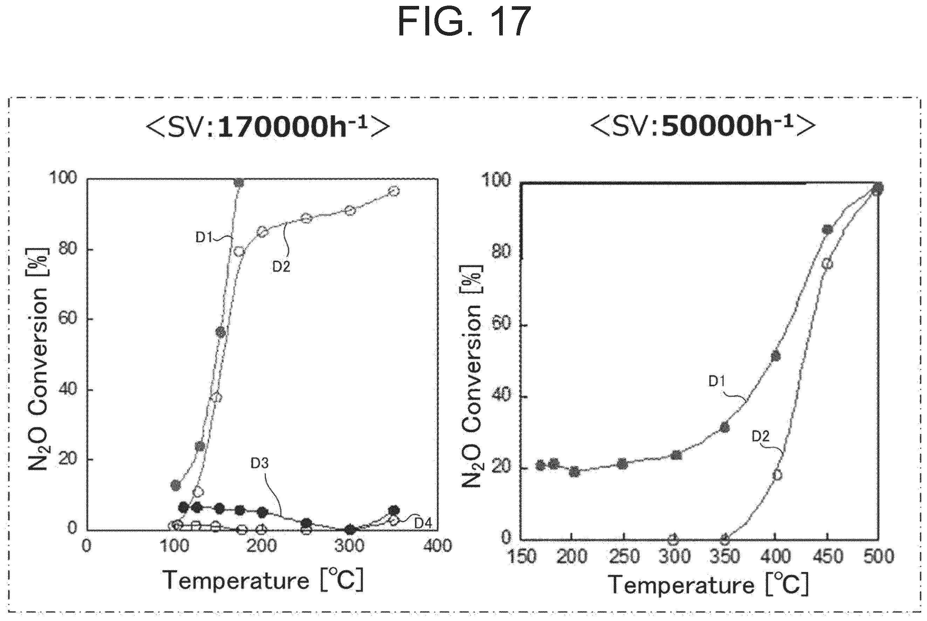

FIG. 17 is a graph presenting actual values for the dinitrogen oxide purification rates in a case using ammonia (NH₃) as a reducing agent. The test conditions other than the temperature of the catalyst 11 in FIG. 17 are as follows (in the case of "with electric field"): the value of electric current flowing through the catalyst 11 is "3 mA" or "6 mA", the amount of the catalyst 11 is "100 mg" or "200 mg", the flow rate of dinitrogen oxide is "100 mL/min" or "200 mL/min", and the reaction pressure is "atmospheric pressure". The composition of the gas that acts on the catalyst 11 is "dinitrogen oxide (N₂O): 1500 ppm, ammonia (NH₃): 1000 ppm, argon (Ar): balance". On the left side of FIG. 17, D1 represents data for "with electric field", and D2 represents data for "without electric field", in the case that the material for the catalyst 11 is "5 wt% Rh/CeO₂" and the space velocity (SV) is "170000h-1". D3 and D4 represent data for "with electric field" and "without electric field" respectively in the presence of coexisting 10% oxygen (O₂). On the right side of FIG. 17, D1 represents data for "with electric field", and D2 represents data for "without electric field", in the case that the material for the catalyst 11 is "1 wt% Rh/CeO₂" and the space velocity (SV) is "5000 h-1" in the presence of coexisting 10% oxygen (O₂).

As is clear from FIG. 17, the reduction reaction with the reducing agent (NH₃) is significantly deteriorated due to coexisting oxygen (O₂), but the dinitrogen oxide purification rate in a low temperature range can be sufficiently ensured by modulating the space velocity or the like.

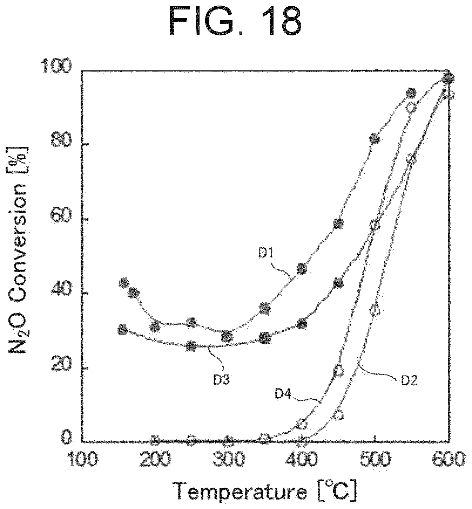

FIG. 18 is a graph presenting actual values for the dinitrogen oxide purification rates in a case using a reducing agent. The test conditions other than the temperature of the catalyst 11 in FIG. 18 are as follows (in the case of "with electric field"): the value of electric current flowing through the catalyst 11 is "6 mA", the material for the catalyst 11 is "5 wt% Cu/CeO₂", the amount of the catalyst 11 is "200 mg", the flow rate of dinitrogen oxide is "100 mL/min", and the reaction pressure is "atmospheric pressure". The composition of the gas that acts on the catalyst 11 is "dinitrogen oxide (N₂O): 1500 ppm, oxygen (O₂): 10%, argon (Ar): balance". In FIG. 18, in the case using ammonia (NH₃): 1000 ppm as the reducing agent, D1 represents data for "with electric field", and D2 represents data for "without electric field", and in the case using hydrogen (H₂): 1500 ppm as the reducing agent, D3 represents data for "with electric field" and D4 represents data for "without electric field".

As is clear from FIG. 18, even when using inexpensive copper (Cu) as the active metal for the catalyst 11, the dinitrogen oxide purification rate in a low temperature range can be sufficiently ensured by modulating the space velocity or the like in the presence of coexisting oxygen (O₂).

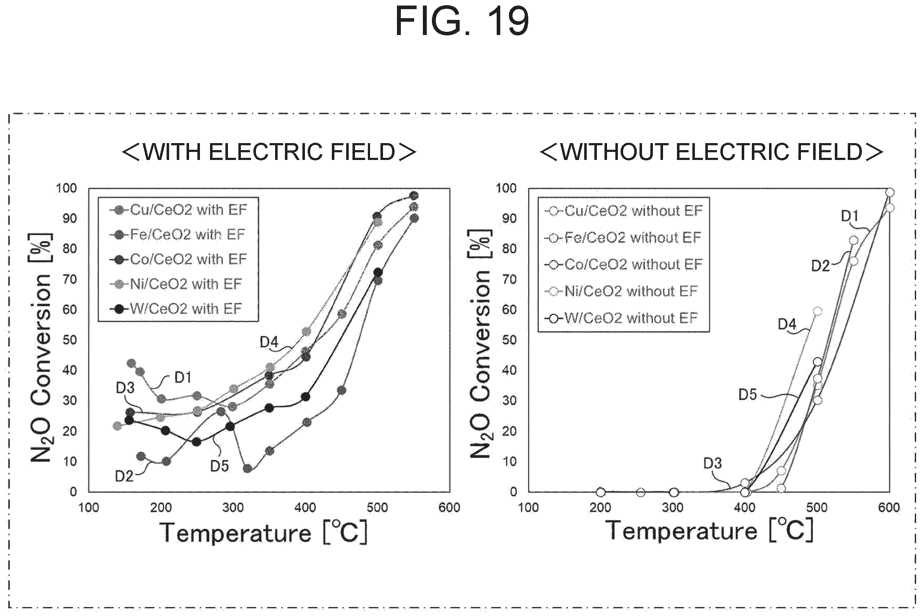

FIG. 19 is a graph presenting actual values for the dinitrogen oxide purification rates with various materials for the catalyst 11 using the reducing agent. The test conditions other than the temperature of the catalyst 11 in FIG. 19 are as follows (in the case of "with electric field"): the value of electric current flowing through the catalyst 11 is "6 mA", the amount of the catalyst 11 is "200 mg", the flow rate of dinitrogen oxide is "100 mL/min", and the reaction pressure is "atmospheric pressure". The composition of the gas that acts on the catalyst 11 using ammonia (NH₃): 1000 ppm as the reducing agent is "dinitrogen oxide (N₂O): 1500 ppm, ammonia (NH₃): 1000 ppm, oxygen (O₂): 10%, argon (Ar): balance". Data for "with electric field" are presented on the left side of FIG. 19, and data for "without electric field" are presented on the right side of FIG. 19. FIG. 19 presents data of each active metal for the catalyst 11, in which D1 represents data of "5 wt% Cu/CeO₂", D2 represents data of "5 wt% Fe/CeO₂", D3 represents data of "5 wt% Co/CeO₂", D4 represents data of "5 wt% Ni/CeO₂", and D5 represents data of "5 wt% W/CeO₂".

As is clear from FIG. 19, even when using various materials as the active metal for the catalyst 11, the dinitrogen oxide purification rate in a low temperature range can be sufficiently ensured by applying an electric field to the catalyst 11 in the presence of coexisting oxygen (O₂).

### [5] Modifications

Modifications of Embodiment 1 will be recited below. The modifications described below can be applied in combination as appropriate.

The dinitrogen oxide purification system 10 in the present disclosure includes a computer system as the control section 2. The computer system includes, as a main component, one or more processors and one or more memories as hardware. The processor executes a program recorded in the memory of the computer system so that the function as the control section 2 according to the present disclosure is implemented. The program may be previously recorded in the memory of the computer system, or may be provided via an electric communication line, or may be provided after recorded in a non-transitory recording medium readable by the computer system, such as a memory card, an optical disk, and a hard disk drive. Some or all of the functional units included in the control section 2 may be composed of electronic circuits.

The configuration in which at least some of the functions of the dinitrogen oxide purification system 10 are integrated into one housing is not essential to the dinitrogen oxide purification system 10, and the components of the dinitrogen oxide purification system 10 may be separately housed in multiple housings. Conversely, in Embodiment 1, the functions distributed in the multiple devices may be integrated into one housing.

At least a part of the internal combustion engine system 100 is not necessarily mounted on a hull but may be provided separately from the hull. For example, when the control section 2 of the dinitrogen oxide purification system 10 is embodied by a server device provided separately from the hull, the control section 2 can control the internal combustion engine system 100 by communication between the server device and (communication device of) the hull. At least some of the functions of the control section 2 may be achieved by cloud (cloud computing) or the like.

The vessel on which the internal combustion engine system 100 is mounted is not limited to vessels that sail a relatively long distance on a single fuel supply like ocean-going vessels, and may be a "pleasure boat" or the like that is a small-sized vessel for use in sports, recreations, or the like in the ocean. Furthermore, the vessel on which the internal combustion engine system 100 is mounted may be a commercial ship such as a cargo ship and a passenger ship, a workboat such as a tugboat and a salvage boat, a special ship such as a meteorological observation ship and a training ship, a fishing ship, a naval ship, or the like. The vessel is not limited to a manned type ship boarded by an operator, and may be an unmanned type vessel that can be remotely operated by a person (navigator) or autonomously operated. The hull of the vessel may include, in addition to the engine 101, one or more dynamic power sources such as a motor (electric motor). The internal combustion engine system 100 may be used for an application other than vessels, e.g. operating machines, vehicles, or flying objects.

The dinitrogen oxide purification system 10 may be used for other applications than the internal combustion engine system 100. For example, the dinitrogen oxide purification system 10 may be used in facilities where dinitrogen oxide can be generated, such as farms (including fields and plastic greenhouses), ranches, fermentation treatment facilities, and sewage treatment facilities. In this case, in the dinitrogen oxide purification system 10, dinitrogen oxide generated in these facilities can be collected by a collector and taken into the intake section 14 so as to be purified (decomposed or reduced).

Since an electric field only needs to be applied on the catalyst 11, the purification section 1 does not necessarily have the pair of electrodes 12 and 13, and, for example, the purification section 1 may have only one electrode 12. Furthermore, the power supply 3 is not necessarily included in the components of the dinitrogen oxide purification system 10, and therefore a voltage may be applied to the catalyst 11 (between the pair of electrodes 12 and 13) from a power supply located outside the dinitrogen oxide purification system 10.

The control section 2 for controlling the dinitrogen oxide purification rate in the purification section 1 is not essential to the dinitrogen oxide purification system 10, and therefore the control section 2 may be omitted. Also, it is not essential to the dinitrogen oxide purification system 10 that the purification section 1 has the catalyst 11, and the electrodes 12 and 13. Also, it is not essential to the dinitrogen oxide purification system 10 that the control section 2 changes the dinitrogen oxide purification rate in the purification section 1 by changing at least one of the temperature of the catalyst 11, the value of electric current flowing through the catalyst 11, the amount of the reducing agent, and the space velocity. Also, it is not essential to the dinitrogen oxide purification system 10 that the control section 2 changes the purification rate by changing at least the value of electric current so that the higher the value of electric current is, the higher the purification rate is.

The heating section 4 for heating the catalyst 11 is not essential to the dinitrogen oxide purification system 10, and therefore the heating section 4 may be omitted. Also, it is not essential to the dinitrogen oxide purification system 10 that the active metal for the catalyst 11 is at least one of Rh, Pd, Pt, Fe, Cu, Ni, Co, W, and V, and that the catalyst carrier of the catalyst 11 includes any of Ce, Zr, Y, La, Nd, and Pr.

Also, it is not essential to the internal combustion engine system 100 that the purification section 1 is heated using exhaust heat from the engine 101. Also, it is not essential to the internal combustion engine system 100 that at least ammonia is used as a fuel for the engine 101.

### [Appendix of Invention]

An outline of the invention extracted from the above-described embodiment will be described below as appendixes. The configurations and processing functions described in the following appendixes can be selected and arbitrarily combined.

### <Appendix 1>

A dinitrogen oxide purification system including:
an intake section that takes in dinitrogen oxide in the presence of coexisting O₂ and/or H₂O, and
a purification section that decomposes or reduces the dinitrogen oxide taken into the intake section.

### <Appendix 2>

The dinitrogen oxide purification system according to Appendix 1, in which
the purification section has:
a catalyst that decomposes or reduces the dinitrogen oxide; and
an electrode that applies an electric field to the catalyst.

### <Appendix 3>

The dinitrogen oxide purification system according to Appendix 2, further including:
a power supply that applies a voltage to the electrode.

### <Appendix 4>

The dinitrogen oxide purification system according to Appendix 2 or 3, further including:
a control section that changes a purification rate of the dinitrogen oxide in the purification section by changing at least one of a temperature of the catalyst, a value of electric current flowing through the catalyst, an amount of a reducing agent, and a space velocity.

### <Appendix 5>

The dinitrogen oxide purification system according to Appendix 4, in which
the control section changes the purification rate by changing at least the value of electric current so that the higher the value of electric current is, the higher the purification rate is.

### <Appendix 6>

The dinitrogen oxide purification system according to any one of Appendixes 2 to 5, further including:
a heating section that heats the catalyst, in which
in the heating section, the temperature of the catalyst is set to within a range of 50°C or higher and 600°C or lower.

### <Appendix 7>

The dinitrogen oxide purification system according to any one of Appendixes 2 to 6, in which
the catalyst has an active metal and a catalyst carrier,
the active metal is at least one of Rh, Pd, Pt, Fe, Cu, Ni, Co, W, and V, and
the catalyst carrier contains any of Ce, Zr, Y, La, Nd, and Pr.

### <Appendix 8>

A dinitrogen oxide purification system including:
an intake section that takes in dinitrogen oxide; and
a purification section that decomposes or reduces the dinitrogen oxide taken into the intake section, in which
the purification section includes
a catalyst that decomposes or reduces the dinitrogen oxide, and
an electrode that applies an electric field to the catalyst.

### <Appendix 9>

An internal combustion engine system including:
the dinitrogen oxide purification system according to any one of Appendixes 1 to 8, and
an engine, in which
the dinitrogen oxide purification system is disposed in an exhaust gas path leading from the engine.

### <Appendix 10>

The internal combustion engine system according to Appendix 9, in which
the purification section is heated using an exhaust heat from the engine.

### <Appendix 11>

The internal combustion engine system according to Appendix 9 or 10, in which
at least ammonia is used as a fuel for the engine.

### REFERENCE SIGNS LIST

1: Purification section
2: Control section
3: Power supply
4: Heating section
10: Dinitrogen oxide purification system
11: Catalyst
12, 13: Electrode
14: Intake section
100: Internal combustion engine system
101: Engine

## Claims

1. A dinitrogen oxide purification system comprising:
an intake section that takes in dinitrogen oxide in the presence of coexisting O₂ and/or H₂O, and
a purification section that decomposes or reduces the dinitrogen oxide taken into the intake section.

2. The dinitrogen oxide purification system according to claim 1, wherein
the purification section has:
a catalyst that decomposes or reduces the dinitrogen oxide; and
an electrode that applies an electric field to the catalyst.

3. The dinitrogen oxide purification system according to claim 2, further comprising:
a power supply that applies a voltage to the electrode.

4. The dinitrogen oxide purification system according to claim 2 or 3, further comprising:
a control section that changes a purification rate of the dinitrogen oxide in the purification section by changing at least one of a temperature of the catalyst, a value of electric current flowing through the catalyst, an amount of a reducing agent, and a space velocity.

5. The dinitrogen oxide purification system according to claim 4, wherein
the control section changes the purification rate by changing at least the value of electric current so that the higher the value of electric current is, the higher the purification rate is.

6. The dinitrogen oxide purification system according to claim 2 or 3, further comprising:
a heating section that heats the catalyst, wherein
in the heating section, a temperature of the catalyst is set to within a range of 50°C or higher and 600°C or lower.

7. The dinitrogen oxide purification system according to claim 2 or 3, wherein
the catalyst has an active metal and a catalyst carrier,
the active metal is at least one of Rh, Pd, Pt, Fe, Cu, Ni, Co, W, and V, and
the catalyst carrier contains any of Ce, Zr, Y, La, Nd, and Pr.

8. A dinitrogen oxide purification system comprising:
an intake section that takes in dinitrogen oxide; and
a purification section that decomposes or reduces the dinitrogen oxide taken into the intake section, wherein
the purification section comprises
a catalyst that decomposes or reduces the dinitrogen oxide, and
an electrode that applies an electric field to the catalyst.

9. An internal combustion engine system comprising:
the dinitrogen oxide purification system according to any one of claims 1 to 3, and
an engine, wherein
the dinitrogen oxide purification system is disposed in an exhaust gas path leading from the engine.

10. The internal combustion engine system according to claim 9, wherein
the purification section is heated using an exhaust heat from the engine.

11. The internal combustion engine system according to claim 9, wherein
at least ammonia is used as a fuel for the engine.

12. A dinitrogen oxide purification method comprising
taking in dinitrogen oxide in the presence of coexisting O₂ and/or H₂O, and
decomposing or reducing the taken-in dinitrogen oxide.
